(19)

**Europäisches Patentamt**
**European Patent Office**
**Office européen des brevets**

(11) **EP 4 517 616 A1**

(12) **EUROPEAN PATENT APPLICATION**
published in accordance with Art. 153(4) EPC

(43) Date of publication:
**05.03.2025 Bulletin 2025/10**

(21) Application number: **22939748.4**

(22) Date of filing: **15.09.2022**

(51) International Patent Classification (IPC):
*G06Q 10/06* (2023.01)  *G21D 3/16* (2006.01)
*G21D 3/00* (2006.01)  *G21C 7/08* (2006.01)

(86) International application number:
**PCT/CN2022/118940**

(87) International publication number:
**WO 2023/206924 (02.11.2023 Gazette 2023/44)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **28.04.2022 CN 202210461438**

(71) Applicants:
• **China Nuclear Power Technology Research**
  **Institute Co., Ltd.**
  **Shenzhen, Guangdong 518031 (CN)**
• **China General Nuclear Power Corporation**
  **Shenzhen, Guangdong 518028 (CN)**
• **CGN Power Co., Ltd.**
  **Shenzen, Guangdong 518028 (CN)**

(72) Inventors:
• **MAO, Yulong**
  **Shenzhen, Guangdong 518031 (CN)**
• **WEI, Danjing**
  **Shenzhen, Guangdong 518031 (CN)**

• **ZHANG, Wei**
  **Shenzhen, Guangdong 518031 (CN)**
• **ZHU, Jianmin**
  **Shenzhen, Guangdong 518031 (CN)**
• **LIU, Yiran**
  **Shenzhen, Guangdong 518031 (CN)**
• **WANG, Weiru**
  **Shenzhen, Guangdong 518031 (CN)**
• **CHEN, Tianming**
  **Shenzhen, Guangdong 518031 (CN)**
• **ZHOU, Mingjia**
  **Shenzhen, Guangdong 518031 (CN)**
• **LI, Bingwen**
  **Shenzhen, Guangdong 518031 (CN)**
• **WANG, Na**
  **Shenzhen, Guangdong 518031 (CN)**
• **WANG, Kai**
  **Shenzhen, Guangdong 518031 (CN)**

(74) Representative: **Michalski Hüttermann & Partner**
**Patentanwälte mbB**
**Kaistraße 16A**
**40221 Düsseldorf (DE)**

(54) **REACTOR CORE CONTROL METHOD AND APPARATUS, COMPUTER DEVICE, STORAGE MEDIUM, AND PROGRAM PRODUCT**

(57)    The present application relates to a reactor core control method and apparatus (400), a computer device, a storage medium, and a program product. The method comprises: controlling a first rod group, a second rod group, and a third rod group to act according to an average temperature deviation between a actual temperature value and a set temperature value of a coolant of a reactor core, a rod position deviation between a target rod position and an actual rod position of the first rod group, and an axial power deviation difference value between an actual axial power deviation and a preset axial power deviation of the reactor core.

The computer device obtains an actual temperature value and a preset temperature value of a coolant of the reactor core, and subtracts the actual temperature value from the preset temperature value, to obtain an average temperature error. — 201

The computer device obtains a target rod position and an actual rod position of a first rod group, subtracts the actual rod position from the target rod position to obtain a rod position error, and the first rod group is configured to compensate for the power of the reactor core. — 202

The computer device obtains an actual axial power deviation and a preset axial power deviation of the reactor core, and subtracts the actual axial power deviation from the preset axial power deviation to obtain an axial power deviation error. — 203

The computer device controls actions of the first rod group, the second rod group and the third rod group based on the rod position deviation, the average temperature deviation and the axial power deviation error. — 204

FIG. 2

EP 4 517 616 A1

# Description

## CROSS-REFERENCE TO RELATED APPLICATION

The present application claims the priority of Chinese patent application No. 2022104614384, filed on April 28, 2022, and entitled "REACTOR CORE CONTROL METHOD AND APPARATUS, COMPUTER DEVICE, STORAGE MEDIUM AND PROGRAM PRODUCT", which is incorporated herein by reference in its entirety.

## TECHNICAL FIELD

The present application relates to the field of reactor core control technology, and in particular to a reactor core control method, a reactor core control apparatus, a computer device, a storage medium, and a program product.

## BACKGROUND

In order to meet load requirements for the grid side, nuclear power plants need to have load tracking capabilities. When the load at the grid side changes, it is necessary to adjust the intensity of the reactor core reaction timely to change the power of the reactor core, so as to track the changes in the load at the grid side timely. However, adjusting the intensity of the reactor core reaction will cause changes in the reactor core power, coolant temperature and axial power deviation. In order to ensure the safe operation of the reactor core, the reactor core power should be compensated in time, and the coolant temperature and the axial power deviation should be adjusted in time.

In the existing technology, pressurized-water reactors running in China basically adopt a traditional operation control mode that is based on chemical compensation, which requires an operator to frequently adjust a boron concentration in the reactor core during a load tracking process.

However, at the end of the reactor life cycle, when the fuel consumption is high and the boron concentration is very low, the reactor's power boost capability is very weak, and the production of boron waste liquid increases sharply, which may cause a waste liquid treatment system of the nuclear power plant hardly to bear the burden and thus the nuclear power plant loses its load tracking capability. In addition, the large amount of waste liquid production affects the economic efficiency, safety and ecological benefits of the nuclear power plant.

## SUMMARY

In view of the above, the present invention provides a reactor core control method, a reactor core control apparatus, a computer device, a storage medium and a program product, which can quickly compensate for the power of the reactor core, and adjust the coolant temperature and the axial power deviation.

In a first aspect, the present application provides a reactor core control method, and the method includes: obtaining an actual temperature value and a preset temperature value of a coolant of the reactor core, and subtracting the actual temperature value from the preset temperature value to obtain an average temperature error; obtaining a target rod position and an actual rod position of a first rod group, subtracting the actual rod position from the target rod position to obtain a rod position error, the first rod group being configured to compensate for a power of the reactor core; obtaining an actual axial power deviation and a preset axial power deviation of the reactor core, and subtracting the actual axial power deviation from the preset axial power deviation to obtain an axial power deviation error; and controlling an action of the first rod group, an action of a second rod group, and an action of a third rod group based on the rod position error, the average temperature error and the axial power deviation error. The second rod group is configured to adjust the average temperature error of the coolant, and the third rod group is configured to adjust the axial power deviation error.

In one of the embodiments, controlling the action of the first rod group, the action of the second rod group, and the action of the third rod group based on the rod position error, the average temperature error and the axial power deviation error, includes:

obtaining a first action state of the first rod group based on the rod position error;
obtaining a second action state of the second rod group based on the average temperature error;
obtaining a third action state of the third rod group based on the axial power deviation error; and
controlling the action of the first rod group, the action of the second rod group, and the action of the third rod group according to the first action state, the second action state, and the third action state, respectively.

The first action state includes the first rod group remaining stationary, the first rod group being inserted downward, or the first rod group being lifted upward; the second action state includes the second rod group remaining stationary, the second rod group being inserted downward, or the second rod group being lifted upward; and the third action state includes the third rod group remaining stationary, the third action state being inserted downward, or the third action state being lifted upward.

In one of the embodiments, controlling the action of the first rod group, the action of the second rod group, and the action of the third rod group according to the first action state, the second action state, and the third action state, includes:

controlling the action of the second rod group and the action of the third rod group according to a relationship between the average temperature error and a second preset dead region, when the first action state is the first rod group remaining stationary; controlling the action of the first rod group and the action of the second rod group according to the relationship between the average temperature error and the second preset dead region, when the third action state is the third rod group remaining stationary; controlling the first rod group and the third rod group to act freely and controlling the second rod group to remain stationary, when the average temperature error is within a first preset dead region; and controlling the action of the first rod group, the action of the second, and the action of the third rod group according to the first action state, the second action state, the third action state, and the relationship between the average temperature error and the second preset dead region, when the average temperature error is not within the first preset dead region, and when the first action state is not remaining stationary.

In one of the embodiments, controlling the action of the second rod group and the action of the third rod group according to the relationship between the average temperature error and the second preset dead region includes:

controlling the second rod group and the third rod group to act freely, when the average temperature error is within the second preset dead region; and controlling the second rod group to act and controlling the third rod group to remain stationary, when the average temperature error is not within the second preset dead region.

In one of the embodiments, controlling the action of the first rod group and the action of the second rod group according to the relationship between the average temperature error and the second preset dead region includes:

controlling the first rod group and the second rod group to act freely, when the average temperature error is within the second preset dead region; and controlling the second rod group to act and controlling the first rod group to remain stationary, when the average temperature error is not within the second preset dead region.

In one of the embodiments, controlling the action of the first rod group, the action of the second rod group, and the action of the third rod group according to the first action state, the second action state, the third action state, and the relationship between the average temperature error and the second preset dead region,

includes:

controlling the first rod group and the second rod group to act according to the first action state and the second action state and controlling the third rod group to remain stationary, when the average temperature error is not within the second preset dead region; and controlling the action of the first rod group, the action of the second rod group, and the action of the third rod group according to the first action state, the second action state, and the third action state, when the average temperature error is within the second preset dead region.

In one of the embodiments, controlling the first rod group and the second rod group to act according to the first action state and the second action state includes:

controlling the first rod group and the second rod group to act freely, when the first action state and the second action state are identical; and controlling the second rod group to act and controlling the first rod group to remain stationary, when the first action state and the second action state are different.

In one of the embodiments, controlling the action of the first rod group, the action of the second rod group, and the action of the third rod group according to the first action state, the second action state, and the third action state, includes:

controlling the first rod group, the second rod group, and the third rod group to act freely, when the first action state, the second action state and the third action state are identical; and controlling two rod groups having identical action states to act freely and controlling another rod group having a different action state to remain stationary, when the first action state, the second action state and the third action state are not identical.

In a second aspect, the present application further provides a reactor core control apparatus, and the apparatus includes: a first acquisition module configured to obtain an actual temperature value and a preset temperature value of a coolant of the reactor core, and subtract the actual temperature value from the preset temperature value to obtain an average temperature error; a second acquisition module configured to obtain a target rod position and an actual rod position of a first rod group, and subtract the actual rod position from the target rod position to obtain a rod position error, the first rod group being configured to compensate for a power of the reactor core; a third acquisition module configured to obtain an actual axial power deviation and a preset axial power deviation of the reactor core, and subtract the actual axial power deviation from the preset axial power deviation to obtain an axial power deviation error; and a control module configured to control an action of the first rod group, an action of a second rod group, and an action of a third rod group based on the rod position error, the average temperature error, and the axial power deviation error. The second rod group is configured to adjust the average temperature error of the coolant, and the third rod group is configured to adjust the axial power deviation error.

In one of the embodiments, the control module is specifically configured to obtain a first action state of the first rod group based on the rod position error, obtain a second action state of the second rod group based on the average temperature error, obtain a third action state of the third rod group based on the axial power deviation error, and control the actions of the first rod group, the second rod group, and the third rod group according to the first action state, the second action state, and the third action state. Where, the first action state includes the first rod group remaining stationary, the first rod group being inserted downward, or the first rod group being lifted upward; the second action state includes the second rod group remaining stationary, the second rod group being inserted downward, or the second rod group being lifted upward; and the third action state includes the third rod group remaining stationary, the third action state being inserted downward, or the third action state being lifted upward.

In one of the embodiments, the control module is specifically configured to: control the actions of the second rod group and the third rod group according to the relationship between the average temperature error and a second preset dead region when the first action state is the first rod group remaining stationary; control the actions of the first rod group and the second rod group according to the relationship between the average temperature error and the second preset dead region when the third action state is the third rod group remaining stationary; control the first rod group and the third rod group to act freely and control the second rod group to remain stationary, when the average temperature error is within the first preset dead region; and control the actions of the first rod group, the second rod group and the third rod group according to the first action state, the second action state, the third action state and the relationship between the average temperature error and the second preset dead region, when the average temperature error is not within the first preset dead region and the first action state is not remaining stationary.

In one of the embodiments, the control module is specifically configured to: control the second rod group and the third rod group to act freely, when the average temperature error is within the second preset dead region; and control the second rod group to act and control the third rod group to remain stationary when the average temperature error is not within the second preset dead region.

In one of the embodiments, the control module is specifically configured to control the first rod group and the second rod group to act freely when the average temperature error is within the second preset dead region, and control the second rod group to act and control the first rod group to remain stationary when the average temperature error is not within the second preset dead region.

In one of the embodiments, the control module is specifically configured to, when the average temperature error is not within the second preset dead region, control the first rod group and the second rod group to act according to the first action state and the second action state, and control the third rod group to remain stationary,; and control the actions of the first rod group, the second rod group, and the third rod group according to the first action state, the second action state, and the third action state, when the average temperature error is within the second preset dead region.

In one of the embodiments, the control module is specifically configured to control the first rod group and the third rod group to act freely when the first action state and the third action state are identical; and control the second rod group to act and control the first rod group to remain stationary when the first action state and the third action state are not identical.

In one of the embodiments, the control module is specifically configured to: control the first rod group, the second rod group and the third rod group to act freely when the first action state, the second action state and the third action state are identical; and control two rod groups having identical action states to act freely and control another rod group having a different action state to remain stationary, when the first action state, the second action state and the third action state are not identical.

In a third aspect, the present application further provides a computer device including a memory and a processor, wherein, the memory has a computer program stored thereon; and the processor, when executing the computer program, implements steps of any one of the methods above.

In a fourth aspect, the present application further provides a computer-readable storage medium having a computer program stored thereon. The computer program, when executed by a processor, forces the processor to implement steps of any one of the methods above.

In a fifth aspect, the present application further provides a computer program product. The computer program product includes a computer program, and the computer program, when executed by a processor, forces the processor to implement steps of any one of the methods above.

The above-mentioned reactor core control method and apparatus, the computer device, the storage medium, and the program product provide the first rod group for compensating for the power of the reactor core, the second rod group for adjusting the average temperature error of the coolant, and the third rod group for adjusting the axial power deviation error. The first rod group, the second rod group and the third rod group function as control rods, and are made of strong neutron absorbing materials. By controlling the number of neutrons in the reactor core, the purposes of quickly compensating for the power of the reactor core and adjusting the coolant temperature and the axial power deviation are achieved, and the safe operation of the reactor core is ensured. Meanwhile, compared with the way of adjusting the boron concentration in the prior art, the control method in the embodiments of the present application may reduce the waste liquid production, and improve the economic efficiency, safety and ecological benefits of the nuclear power plant.

BRIEF DESCRIPTION OF THE DRAWINGS

In order to illustrate the embodiments of the present application or the technical solutions in the prior art more clearly, the drawings required to be used in the description of the embodiments or the prior art will be briefly described herein. Obviously, the drawings described below are merely embodiments of the present application, and for those ordinary skilled in the art, other drawings may be obtained based on the disclosed drawings without any creative work.

FIG.1 is a schematic view showing an implementation environment according to an embodiment of the present application;
FIG.2 is a flow chart of a reactor core control method according to an embodiment of the present application;
FIG.3 is a schematic view showing a principle of the reactor core control method according to an embodiment of the present application;
FIG.4 is a block diagram showing a reactor core control apparatus according to an embodiment of the present application; and
FIG.5 is a view showing an internal structure of a computer device according to an embodiment of the present application.

DETAILED DESCRIPTION OF THE EMBODIMENTS

In order to make the objectives, technical solutions, and advantages of the present application clearer and better understood, the present application is further described in detail below in conjunction with the accompanying drawings and embodiments. It should be understood that the specific embodiments described herein are only used to explain the present application but not intended to limit the present application.

In order to meet the load requirements for the grid side, nuclear power plants need to have load tracking capabilities. When the load at the grid side changes, it is necessary to adjust the intensity of the reactor core reaction timely to change the power of the reactor core, so as to track the changes in the load at the grid side timely. However, adjusting the intensity of the reactor core reaction will cause changes in the reactor core power, coolant temperature and axial power deviation. In order to ensure the safe operation of the reactor core, the reactor core power should be compensated timely, and the coolant temperature and the axial power deviation should be adjusted in time.

In the existing technology, pressurized-water reactors running in China basically adopt the traditional operation control mode that is based on chemical compensation, which requires the operator to frequently adjust the boron concentration in the reactor core during the load tracking process.

However, at the end of the reactor life cycle, when the fuel consumption is high and the boron concentration is very low, the reactor's power boost capability is very weak, and the production of boron waste liquid increases sharply, which may cause a waste liquid treatment system of the nuclear power plant hardly to bear the burden and thus the nuclear power plant loses its load tracking capability. In addition, the large amount of waste liquid production affects the economic efficiency, safety and ecological benefits of the nuclear power plant.

In view of this, embodiments of the present application provide a reactor core control method, a reactor core control apparatus, a computer device, a storage medium and a program product. By using the reactor core control method, the power of the reactor core can be quickly compensated, and the coolant temperature and the axial power deviation can be adjusted quickly.

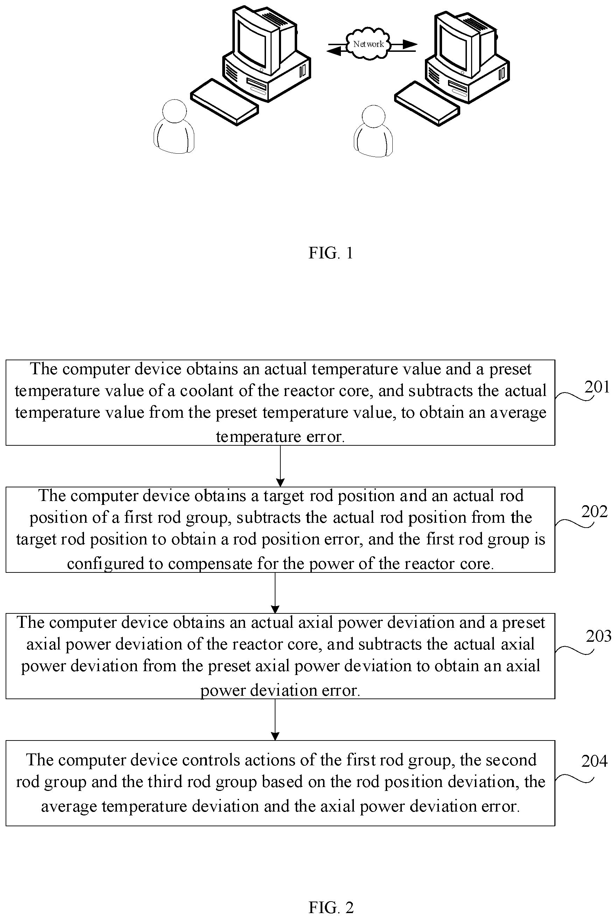

Referring to FIG. 1, FIG. 1 is a schematic view showing an implementation environment of the reactor core control method according to an embodiment of the present application. As shown in FIG. 1, the execution subject of the reactor core control method of the embodiment of the present application may be a computer device, or a computer device cluster consisting of multiple computer devices, and the computer device may be a protective equipment. Different computer devices may communicate with each other via wired or wireless means. The wireless means may be carried out through WIFI, operator networks, NFC (near field communication) or other technologies.

Referring to FIG.2, FIG.2 shows a flow chart of a reactor core control method provided in an embodiment of the present application. The reactor core control method can be applied to the computer device shown in FIG. 1. As shown in FIG.2, the reactor core control method may include the following steps.

In Step 201, a computer device obtains an actual temperature value and a preset temperature value of a coolant of the reactor core, and subtracts the actual temperature value from the preset temperature value, to obtain an average temperature error.

Optionally, the actual temperature value may be collected by using a temperature sensor, and the temperature sensor may upload the collected actual temperature value to the computer device. The preset temperature value is within a temperature range that satisfies the safe operation of the reactor core. Optionally, the preset temperature value may be a value obtained based on a large amount of experimental data and after conducting experiments on a certain platform, or may be a fixed value set by the operator.

In Step 202, the computer device obtains a target rod position and an actual rod position of a first rod group, subtracts the actual rod position from the target rod position to obtain a rod position error.

Where, the first rod group is configured to compensate for the power of the reactor core to compensate for some reactivity changes caused by power changes, and the actual rod position refers to an actual position of the first rod group in the reactor core. Optionally, the actual rod position may be collected by a position sensor and uploaded to the computer device. Optionally, the target rod position may be calculated based on a fuel consumption and a power of the reactor core.

In Step 203, the computer device obtains an actual axial power deviation and a preset axial power deviation of the reactor core, and subtracts the actual axial power deviation from the preset axial power deviation to obtain an axial power deviation error.

Where, the actual axial power deviation is configured to characterize a uniformity of axial power distribution in the reactor core, which is related to the safe operation of the reactor core and is a very important control parameter. Optionally, the preset axial power deviation may be a value obtained based on a large amount of experimental data and after conducting experiments on a certain platform, or may be a fixed value set by the operator. Where, a calculation formula for the actual axial power deviation is as follows:

$$\triangle I = AO \times Pr$$

where $AO$ denotes an axial power deviation, $Pr$ denotes a relative power level, and $\triangle I$ denotes the actual axial power deviation.

When the actual axial power deviation $\triangle I$ is over-positive or over-negative, it means that there must be a "hot spot" with a local high power in the axial direction in the reactor core, while a local excessive high power may cause fuel assemblies in the reactor core to be burnt out. Therefore, the actual axial power deviation $\triangle I$ needs to be adjusted.

In Step 204, the computer device controls actions of the first rod group, the second rod group and the third rod group based on the rod position error, the average temperature error and the axial power deviation error.

Where, the second rod group is configured to adjust the average temperature error of the coolant of the reactor core, and the third rod group is configured to adjust the axial power deviation error.

Optionally, a first action state of the first rod group is obtained based on the rod position error, a second action state of the second rod group is obtained based on the average temperature error, a third action state of the third rod group is obtained based on the axial power deviation error, and the actions of the first rod group, the second rod group, and the third rod group are controlled according to the first action state, the second action state, and the third action state.

Where, the first action state includes the first rod group remaining stationary, the first rod group being inserted downward, or the first rod group being lifted upward; the second action state includes the second rod group remaining stationary, the second rod group being inserted downward, or the second rod group being lifted upward; and the third action state includes the third rod group remaining stationary, the third action state being inserted downward, or the third action state being lifted upward.

Optionally, obtaining the first action state of the first rod group based on the rod position error includes: determining that the first action state is the first rod group remaining stationary when the rod position error is less than a first threshold, and determining that the first action state is the first rod group being inserted downward or the first rod group being lifted upward when the rod position error is not less than the first threshold.

Optionally, obtaining the second action state of the second rod group based on the average temperature error includes: determining the second action state is the second rod group remaining stationary when the average temperature error is less than a first preset dead region, and determining that the second action state is the second rod group being inserted downward or the second rod group being lifted upward when the average temperature error is not less than the first preset dead region.

Optionally, obtaining the third action state of the third rod group based on the axial power deviation error includes: determining that the third action state is the third rod group remaining stationary when the axial power deviation error is less than a second threshold, and determining that the third action state is the third rod group being inserted downward or the third rod group being lifted upward when the axial power deviation error is not less than the second threshold. Where, the axial power deviation error being less than the second threshold indicates that the axial power deviation is within the dead region.

Optionally, the first action state, the second action state and the third action state may further include a moving speed of the first rod group, a moving speed of the second rod group and a moving speed of the third rod group, respectively. Optionally, the first threshold, the first dead region and the second threshold may be values obtained based on a large amount of experimental data and after conducting experiments on a certain platform, or may be fixed values set by the operator.

The embodiments of the present application provide the first rod group for compensating for the power of the reactor core, the second rod group for adjusting the average temperature error of the coolant and the third rod group for adjusting the axial power deviation error. The first rod group, the second rod group and the third rod group function as control rods, and are made of strong neutron absorbing materials. By controlling the number of neutrons in the reactor core, the purposes of quickly compensating for the power of the reactor core and adjusting the coolant temperature and the axial power deviation are achieved, and the safe operation of the reactor core is ensured. Meanwhile, compared with the way of adjusting the boron concentration in the prior art, the control method in the embodiments of the present application may reduce the waste liquid production, and improve the economic efficiency, safety and ecological benefits of the nuclear power plant.

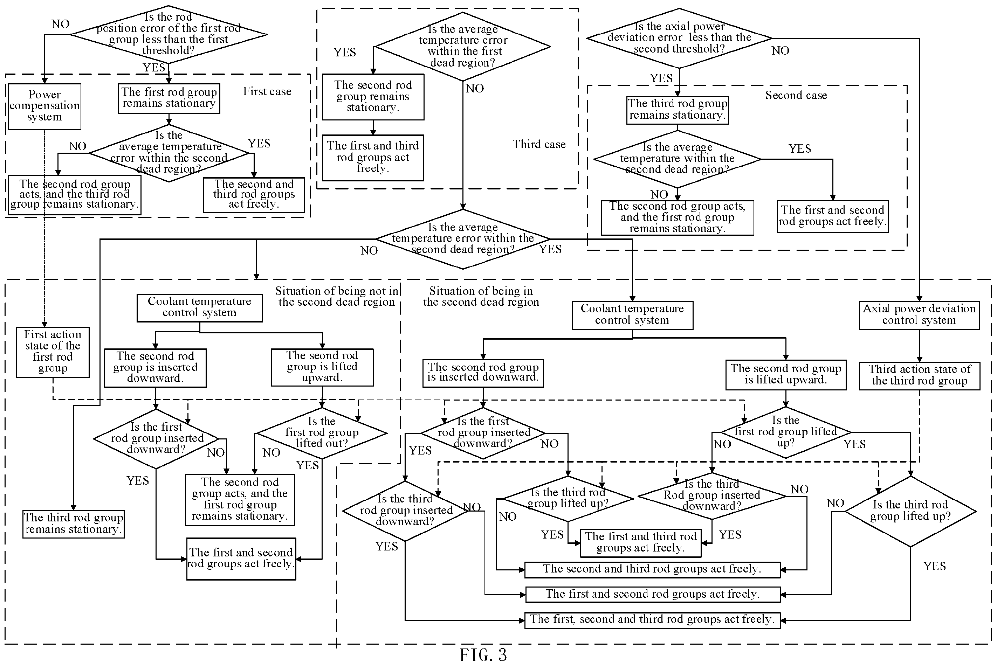

Referring to FIG. 3, FIG. 3 is a schematic view showing a principle of the reactor core control method according to an embodiment of the present application. As shown in FIG.3, the reactor core control method includes four cases.

In the first case, the rod position error of the first rod group is less than the first threshold.

When the rod position error of the first rod group is less than the first threshold, the first action state is the first rod group remaining stationary. In this case, the computer device controls the actions of the second rod group and third rod group according to the relationship between the average temperature error and the second preset dead region. As shown in FIG.3, when the average temperature error is within the second dead region, the second rod group and the third rod group are controlled to act freely, and when the average temperature error is not within the second dead region, the second rod group is controlled to act, and the third rod group is controlled to remain stationary.

Where, the second dead region may be a value obtained based on a large amount of experimental data and after conducting experiments on a certain platform, or may be a fixed value set by the operator.

In the second case, the axial power deviation error is less than the second threshold.

When the axial power deviation error of the third rod group is less than the second threshold, the third action state is the third rod group remaining stationary. In this case, the computer device controls the actions of the first rod group and the second rod group according to the relationship between the average temperature error and a second preset dead region. As shown in FIG.3, when the average temperature error is within the second dead region, the first rod group and the second rod group are controlled to act freely, and when the average temperature error is not within the second dead region, the second rod group is controlled to act, and the first rod group is controlled to remain stationary.

In the third case, the average temperature error is within the first dead region.

In the case that the average temperature error is within the first dead region, as shown in FIG. 3, the computer device controls the first rod group and the third rod group to act freely, and the second rod group is controlled to remain stationary.

In the fourth case, the average temperature error is not within the first dead region, and the first action state is not remaining stationary.

Optionally, the computer device may include a power compensation system, a coolant temperature control system and an axial power deviation control system. Where, the power compensation system is configured to output the first action state of the first rod group according to the relationship between the rod position error and the first threshold. The coolant temperature control system is configured to output the second action state of the second rod group according to the relationship between the average temperature error and the first dead region. The axial power deviation control system is configured to output the third action state of the third rod group based on the relationship between the axial power deviation error and the second threshold.

Optionally, the coolant temperature control system may adopt a typical three-channel control system structure of a pressurized water reactor, and superimpose differential signals of the average temperature error, turbine power and nuclear power deviation, so as to obtain the second action state of the second rod group.

When the average temperature error is not within the first dead region and the first action state is not remaining stationary, the actions of the first rod group, the second rod group and the third rod group are controlled according to the first action state, the second action state, the third action state, and the relationship between the average temperature error and the second dead region.

In an embodiment of the present application, according to the relationship between the average temperature error and the second dead region, the fourth case may be divided into one situation that the average temperature error is within the second dead region and another situation that the average temperature error is not within the second dead region.

First, the situation of being not within the second dead region is described as follows.

As shown in FIG. 3, corresponding to the average temperature error is not within the second dead region: the third rod group is controlled to remain stationary; when the second action state is the second rod group being inserted downward, and when the first action state is the first rod group being inserted downward, then the second rod group and the first rod group are controlled to be inserted downward at the same time; when the second action state is the second rod group being lifted up, and when the first action state is the first rod group being lifted up, then the second rod group and the first rod group are controlled to be lifted up at the same time, that is, when the first action state and the second action state are identical, the first rod group and the third rod group are controlled to act freely.

As shown in FIG. 3, when the second action state is the second rod group being inserted downward, and when the first action state is the first rod group being lifted up, then the second rod group is controlled to be inserted downward, and the first rod group is controlled to remain stationary. When the second action state is the second rod group being lifted up, and when the first action state is the first rod group being inserted downward, then the second rod group is controlled to be lifted up, and the first rod group is controlled to remain stationary. That is, when the first action state and the second action state are different, the second rod group is controlled to act, and the first rod group is controlled to remain stationary (that is, the first rod group is locked).

In addition, the situation of being within the second dead region is described as follows:

As shown in FIG. 3, when the actions of the first rod group, the second rod group, and the third rod group are all being inserted downward or all being lifted upward, then the first rod group, the second rod group and the third rod group are all controlled to be inserted downward or to be lifted up at the same time. That is, when the first action state, the second action state and the third action state are identical, the first rod group, the second rod group and the third rod group act freely.

As shown in FIG. 3, when the first rod group is inserted downward, and when the second and third rod groups are lifted up, then the second and third rod groups are controlled to be lifted up at the same time, and the first rod group is controlled to remain stationary. When the first rod group is lifted up, and when the second and third rod groups are inserted downward, then the second and third rod groups are controlled to be inserted downward at the same time, and the first rod group is controlled to remain stationary. When the second rod group is lifted up, and when the first and third rod groups are inserted downward, then the first and third rod groups are controlled to be inserted downward at the same time, and the second rod group is controlled to remain stationary. When the second rod group is inserted downward, and when the first and third rod groups are lifted up, then the first and third rod groups are controlled to be lifted up at the same time, and the second rod group is controlled to remain stationary. When the third rod group is inserted downward, and when the first and second rod groups are lifted up, then the first and second rod groups are controlled to be lifted up at the same time, and the third rod group is controlled to remain stationary. When the third rod group is lifted up, and when the first and second rod groups are inserted downward, then the first and second rod groups are controlled to be inserted downward at the same time, and the third rod group is controlled to remain stationary. That is, when the first action state, the second action state and the third action state are not identical, two rod groups having the same action state act freely, and another rod group having a different action state is controlled to remain stationary (that is, the other rod group is locked).

Optionally, after the first rod group mentioned above is locked, and after the second rod group completes its action, the first action state of the first rod group may be continuously obtained based on the rod position error. When the first action state is not remaining stationary, the computer device controls the first rod group to act.

Optionally, when the other rod group mentioned above is locked, and after the two rod groups having the same action state have completed their free actions, the action state of the other rod group may be further determined, and the other group may be controlled to act according to the determined action state. For example, when the first rod group is inserted downward, and when the second and third rod groups are lifted up, then the second and third rod groups are controlled to be lifted up at the same time, and the first rod group is controlled to be locked. After the second and third rod groups is lifted up, the first action state of the first rod group may be continuously obtained based on the rod position error. When the first action state is not remaining stationary, the computer device controls the first rod group to act. The locking control in the embodiment of the present application has a better control ability than the control method without locking control, and may play full adjustment ability of the control rods, thereby improving the control performance for the reactor core power and axial power deviation without affecting the stability of the reaction core control system.

Optionally, the first rod group may be configured to quickly and roughly adjust the reactor core power to compensate for partial reactivity changes caused by power changes. The second rod group may be configured to finely adjust the reactor core power and the average temperature error of the coolant, to control the average temperature error to be within a first threshold. The third rod group may be configured to control the axial power deviation error of the reactor core.

Optionally, the first rod group may be mainly composed of gray rods and supplemented by black rods, and the low-value gray rod group is fully used to compensate for the changes in the reactor core reactivity during a load tracking, thus reducing the impact on fuel consumption and power distribution. What is more, two groups of black rods are arranged to meet the requirements for the reactivity control at extreme operating conditions and to ensure sufficient shutdown margin. The first rod group is designed in a stack manner, which may minimize the disturbance to the axial power distribution while adjusting the reactor core power. Optionally, the second rod group may be composed of gray rods only, and after the first rod group compensates for the power, the low-value gray rod group may be utilized to control the average temperature error of the coolant. The second rod group is designed in a stack manner, which may minimize the disturbance to the axial power distribution while adjusting the reactor core power. Optionally, the third rod group may be composed of high-value black rods and can move only within a certain control band in the upper part of the reactor core, thus not only enabling a very small moving distance of the third rod group to have a greater impact on the axial power deviation, but also reducing the disturbance to the reactor core power. In addition, when the action of the third rod group does not change too much, the control ability for the axial power deviation error is improved through optimizing the strategy of action.

In an embodiment of the present application, based on the power compensation system, the coolant temperature control system and the axial power deviation control system, the action logic among the three groups of control rods, namely the first rod group, the second rod group and the third rod group, is designed to achieve the purpose of compensating for the power of the reactor core, adjusting the coolant temperature and the axial power deviation only through the actions of the control rods, and controlling the axial power deviation within the dead region, without adjusting the boron concentration in the coolant of the reactor core, thereby reducing the waste liquid production and improving the economic efficiency, safety and ecological benefits of the nuclear power plant. Furthermore, the reactor core control method of the embodiments of the present application has excellent control capabilities for the power and for the axial power deviation error both at the beginning and end of the life cycle, thus greatly improving the control capability for the axial power deviation at the end of the life cycle.

It should be understood that, although the steps in the flowcharts involved in the embodiments described above are displayed sequentially as indicated by the arrows, these steps are not necessarily executed sequentially in the order indicated by the arrows. Unless otherwise specified herein, there is no strict order limitation for the execution of these steps, and these steps may be executed in other orders. Moreover, at least a part of the steps in the flowcharts involved in the embodiments described above may include multiple steps or multiple stages. These steps or stages are not necessarily executed at the same time, but may be executed at different times. The execution order of these steps or stages is not necessarily sequential, but may be executed in turn or alternately with other steps or at least part of the steps or stages in other steps.

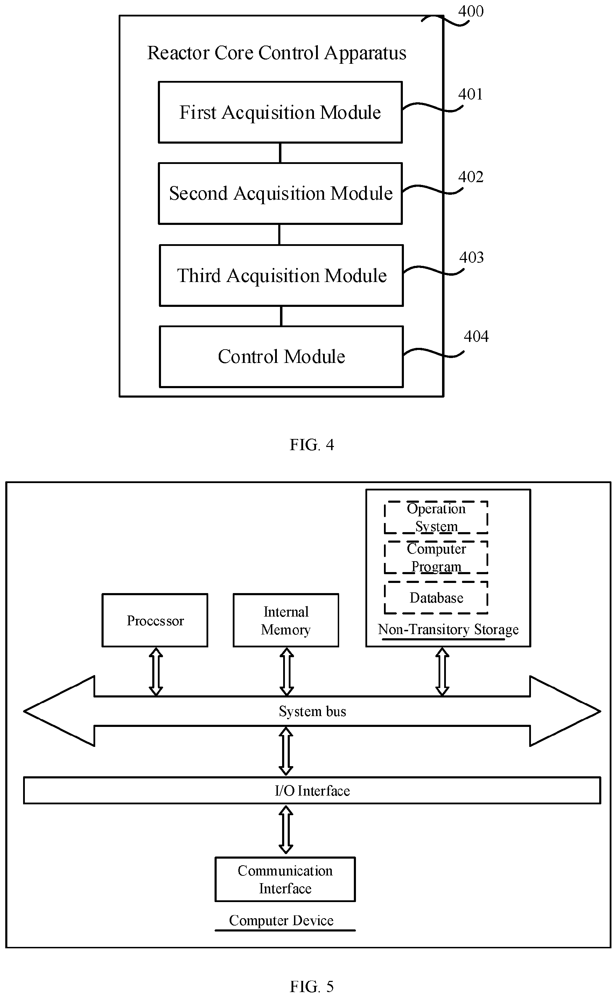

Referring to FIG. 4, FIG.4 is a block diagram showing a reactor core control apparatus 400 according to an embodiment of the present application. The reactor core control apparatus may be arranged in the above-mentioned computer device. As shown in FIG.4, the reactor core control apparatus 400 includes a first acquisition module 401, a second acquisition module 402, a third acquisition module 403 and a control module 404.

Where, the first acquisition module 401 is configured to obtain an actual temperature value and a preset temperature value of a coolant of the reactor core, and subtract the actual temperature value from the preset temperature value, to obtain an average temperature error.

The second acquisition module 402 is configured to obtain a target rod position and an actual rod position of a first rod group, and subtract the actual rod position from the target rod position to obtain a rod position error, the first rod group being configured to compensate for the power of the reactor core. The third acquisition module 403 is configured to obtain an actual axial power deviation and a preset axial power deviation of the reactor core, and subtract the actual axial power deviation from the preset axial power deviation to obtain an axial power deviation error. The control module 404 is configured to control actions of the first rod group, the second rod group and the third rod group based on the rod position error, the average temperature error and the axial power deviation error. Where, the second rod group is configured to adjust the average temperature error of the coolant, and the third rod group is configured to adjust the axial power deviation error.

In one of the embodiments, the control module 404 is specifically configured to obtain a first action state of the first rod group based on the rod position error, obtain a second action state of the second rod group based on the average temperature error, obtain a third action state of the third rod group based on the axial power deviation error, and control the actions of the first rod group, the second rod group, and the third rod group according to the first action state, the second action state, and the third action state. Where, the first action state includes the first rod group remaining stationary, the first rod group being inserted downward, or the first rod group being lifted upward; the second action state includes the second rod group remaining stationary, the second rod group being inserted downward, or the second rod group being lifted upward; and the third action state includes the third rod group remaining stationary, the third action state being inserted downward, or the third action state being lifted upward.

In one of the embodiments, the control module 404 is specifically configured to: control the actions of the second rod group and the third rod group according to the relationship between the average temperature error and a second preset dead region when the first action state is the first rod group remaining stationary; control the actions of the first rod group and the second rod group according to the relationship between the average temperature error and the second preset dead region when the third action state is the third rod group remaining stationary; control the first rod group and the third rod group to act freely and control the second rod group to remain stationary, when the average temperature error is within the first preset dead region; and control the actions of the first rod group, the second rod group and the third rod group according to the first action state, the second action state, the third action state and the relationship between the average temperature error and the second preset dead region, when the average temperature error is not within the first preset dead region and the first action state is not remaining stationary.

In one of the embodiments, the control module 404 is specifically configured to: control the second rod group and the third rod group to act freely, when the average temperature error is within the second preset dead region; and control the second rod group to act and control the third rod group to remain stationary when the average temperature error is not within the second preset dead region.

In one of the embodiments, the control module 404 is specifically configured to control the first rod group and the second rod group to act freely when the average temperature error is within the second preset dead region, and control the second rod group to act and control the first rod group to remain stationary when the average temperature error is not within the second preset dead region.

In one of the embodiments, the control module 404 is specifically configured to, when the average temperature error is not within the second preset dead region, control the first rod group and the second rod group to act according to the first action state and the second action state, and control the third rod group to remain stationary,; and control the actions of the first rod group, the second rod group, and the third rod group according to the first action state, the second action state, and the third action state, when the average temperature error is within the second preset dead region.

In one of the embodiments, the control module 404 is specifically configured to control the first rod group and the third rod group to act freely when the first action state and the third action state are identical; and control the second rod group to act and control the first rod group to remain stationary when the first action state and the third action state are not identical.

In one of the embodiments, the control module 404 is specifically configured to: control the first rod group, the second rod group and the third rod group to act freely when the first action state, the second action state and the third action state are identical; and control two rod groups having identical action states to act freely and control another rod group having a different action state to remain stationary, when the first action state, the second action state and the third action state are not identical.

The embodiment of the present application provides a reactor core control apparatus, which may achieve embodiments of the above method, and has similar implementation principles and technical effects, which are not described in detail herein.

Each module in the above-mentioned reactor core control apparatus may be fully or partially implemented by software, hardware or a combination thereof. The above modules may be embedded in or independent of a processor in a computer device in the form of hardware, or may be stored in a memory in a computer device in the form of software, so that the processor may call and execute operations corresponding to the above modules.

In an embodiment, a computer device is provided, and an internal structure diagram thereof may be shown in FIG.5. The computer device includes a processor, a memory and a network interface connected via a system bus. Where, the processor of the computer device is configured to provide computing and control capabilities. The memory of the computer device includes a non-transitory storage medium and an internal memory. The non- transitory storage medium stores an operating system, a computer program, and a database. The internal memory provides an environment for the operation of the operating system and the computer program in the non- transitory storage medium. The network interface of the computer device is configured to communicate with an external terminal via a network connection. When the computer program is executed by the processor, a reactor core control method is implemented.

Those skilled in the art may understand that the structure shown in FIG. 5 is merely a block diagram of a partial structure related to the solution of the present application, and does not constitute a limitation on the computer device to which the solution of the present application is applied. The specific computer device may include more or fewer components than shown in the figure, or combine certain components, or have a different arrangement of components.

In an embodiment, a computer device is provided, and includes a memory and a processor. The memory has a computer program stored thereon. The processor, when executing the computer program, implements the following steps: obtaining an actual temperature value and a preset temperature value of a coolant of the reactor core, and subtracting the actual temperature value from the preset temperature value, to obtain an average temperature error; obtaining a target rod position and an actual rod position of a first rod group, subtracting the actual rod position from the target rod position to obtain a rod position error, the first rod group being configured to compensate for the power of the reactor core; obtaining an actual axial power deviation and a preset axial power deviation of the reactor core, and subtracting the actual axial power deviation from the preset axial power deviation to obtain an axial power deviation error; and controlling actions of the first rod group, the second rod group and the third rod group based on the rod position error, the average temperature error and the axial power deviation error. Where, the second rod group is configured to adjust the average temperature error of the coolant of the reactor core, and the third rod group is configured to adjust the axial power deviation error.

In an embodiment, the processor, when executing the computer program, further implements the following steps: obtaining a first action state of the first rod group based on the rod position error; obtaining a second action state of the second rod group based on the average temperature error; obtaining a third action state of the third rod group based on the axial power deviation error; and controlling the actions of the first rod group, the second rod group, and the third rod group according to the first action state, the second action state, and the third action state. Where the first action state includes the first rod group remaining stationary, the first rod group being inserted downward, or the first rod group being lifted upward; the second action state includes the second rod group remaining stationary, the second rod group being inserted downward, or the second rod group being lifted upward; and the third action state includes the third rod group remaining stationary, the third action state being inserted downward, or the third action state being lifted upward.

In an embodiment, the processor, when executing the computer program, further implements the following steps: controlling the actions of the second rod group and the third rod group according to the relationship between the average temperature error and a second preset dead region, when the first action state is the first rod group remaining stationary; controlling the actions of the first rod group and the second rod group according to the relationship between the average temperature error and the second preset dead region, when the third action state is the third rod group remaining stationary; controlling the first rod group and the third rod group to act freely and controlling the second rod group to remain stationary, when the average temperature error is within the first preset dead region; and controlling the actions of the first rod group, the second rod group and the third rod group according to the first action state, the second action state, the third action state and the relationship between the average temperature error and the second preset dead region, when the average temperature error is not within the first preset dead region and the first action state is not remaining stationary.

In an embodiment, the processor, when executing the computer program, further implements the following steps: controlling the second rod group and the third rod group to act freely, when the average temperature error is within the second preset dead region; and controlling the second rod group to act and controlling the third rod group to remain stationary, when the average temperature error is not within the second preset dead region.

In an embodiment, the processor, when executing the computer program, further implements the following steps: controlling the first rod group and the second rod group to act freely, when the average temperature error is within the second preset dead region; and controlling the second rod group to act and controlling the first rod group to remain stationary, when the average temperature error is not within the second preset dead region.

In an embodiment, the processor, when executing the computer program, further implements the following steps: controlling the first rod group and the second rod group to act according to the first action state and the second action state and controlling the third rod group to remain stationary, when the average temperature error is not within the second preset dead region; and controlling the actions of the first rod group, the second rod group, and the third rod group according to the first action state, the second action state, and the third action state, when the average temperature error is within the second preset dead region.

In an embodiment, the processor, when executing the computer program, further implements the following steps: controlling the first rod group and the second rod group to act freely, when the first action state and the second action state are identical; and controlling the second rod group to act and controlling the first rod group to remain stationary, when the first action state and the second action state are different.

In an embodiment, the processor, when executing the computer program, further implements the following steps: controlling the first rod group, the second rod group and the third rod group to act freely, when the first action state, the second action state and the third action state are identical; and controlling two rod groups having identical action states to act freely and controlling another rod group having a different action state to remain stationary, when the first action state, the second action state and the third action state are not identical.

An embodiment of the present application provides a computer device, and the computer device has implementation principles and technical effects similar to those of the method embodiments above, which will not be described repeatedly herein.

In an embodiment, a computer-readable storage medium having a computer program stored thereon is provided, and the computer program, when being executed by the processor, forces the processor to implement the following steps: obtaining an actual temperature value and a preset temperature value of a coolant of the reactor core, and subtracting the actual temperature value from the preset temperature value, to obtain an average temperature error; obtaining a target rod position and an actual rod position of a first rod group, subtracting the actual rod position from the target rod position to obtain a rod position error, the first rod group being configured to compensate for the power of the reactor core; obtaining an actual axial power deviation and a preset axial power deviation of the reactor core, and subtracting the actual axial power deviation from the preset axial power deviation to obtain an axial power deviation error; and controlling actions of the first rod group, the second rod group and the third rod group based on the rod position error, the average temperature error and the axial power deviation error. Where, the second rod group is configured to adjust the average temperature error of the coolant of the reactor core, and the third rod group is configured to adjust the axial power deviation error.

In an embodiment, the computer program, when being executed by the processor, further forces the processor to implement the following steps: obtaining a first action state of the first rod group based on the rod position error; obtaining a second action state of the second rod group based on the average temperature error; obtaining a third action state of the third rod group based on the axial power deviation error; and controlling the actions of the first rod group, the second rod group, and the third rod group according to the first action state, the second action state, and the third action state. Where the first action state includes the first rod group remaining stationary, the first rod group being inserted downward, or the first rod group being lifted upward; the second action state includes the second rod group remaining stationary, the second rod group being inserted downward, or the second rod group being lifted upward; and the third action state includes the third rod group remaining stationary, the third action state being inserted downward, or the third action state being lifted upward.

In an embodiment, the computer program, when being executed by the processor, further forces the processor to implement the following steps: controlling the actions of the second rod group and the third rod group according to the relationship between the average temperature error and a second preset dead region, when the first action state is the first rod group remaining stationary; controlling the actions of the first rod group and the second rod group according to the relationship between the average temperature error and the second preset dead region, when the third action state is the third rod group remaining stationary; controlling the first rod group and the third rod group to act freely and controlling the second rod group to remain stationary, when the average temperature error is within the first preset dead region; and controlling the actions of the first rod group, the second rod group and the third rod group according to the first action state, the second action state, the third action state and the relationship between the average temperature error and the second preset dead region, when the average temperature error is not within the first preset dead region and the first action state is not remaining stationary.

In an embodiment, the computer program, when being executed by the processor, further forces the processor to implement the following steps: controlling the second rod group and the third rod group to act freely, when the average temperature error is within the second preset dead region; and controlling the second rod group to act and controlling the third rod group to remain stationary, when the average temperature error is not within the second preset dead region.

In an embodiment, the computer program, when being executed by the processor, further forces the processor to implement the following steps: controlling the first rod group and the second rod group to act freely, when the average temperature error is within the second preset dead region; and controlling the second rod group to act and controlling the first rod group to remain stationary, when the average temperature error is not within the second preset dead region.

In an embodiment, the computer program, when being executed by the processor, further forces the processor to implement the following steps: controlling the first rod group and the second rod group to act according to the first action state and the second action state and controlling the third rod group to remain stationary, when the average temperature error is not within the second preset dead region; and controlling the actions of the first rod group, the second rod group, and the third rod group according to the first action state, the second action state, and the third action state, when the average temperature error is within the second preset dead region.

In an embodiment, the computer program, when being executed by the processor, further forces the processor to implement the following steps: controlling the first rod group and the second rod group to act freely, when the first action state and the second action state are identical; and controlling the second rod group to act and controlling the first rod group to remain stationary, when the first action state and the second action state are different.

In an embodiment, the computer program, when being executed by the processor, further forces the processor to implement the following steps: controlling the first rod group, the second rod group and the third rod group to act freely, when the first action state, the second action state and the third action state are identical; and controlling two rod groups having identical action states to act freely and controlling another rod group having a different action state to remain stationary, when the first action state, the second action state and the third action state are not identical.

An embodiment provides a computer-readable storage medium, and the computer-readable storage medium has implementation principles and technical effects similar to those of the method embodiments above, which will not be described repeatedly herein.

In an embodiment, a program product is provided, and the program product includes a computer program. The computer program, when being executed by the processor, force the processor to implement the following steps: obtaining an actual temperature value and a preset temperature value of a coolant of the reactor core, and subtracting the actual temperature value from the preset temperature value, to obtain an average temperature error; obtaining a target rod position and an actual rod position of a first rod group, subtracting the actual rod position from the target rod position to obtain a rod position error, the first rod group being configured to compensate for the power of the reactor core; obtaining an actual axial power deviation and a preset axial power deviation of the reactor core, and subtracting the actual axial power deviation from the preset axial power deviation to obtain an axial power deviation error; and controlling actions of the first rod group, the second rod group and the third rod group based on the rod position error, the average temperature error and the axial power deviation error. Where, the second rod group is configured to adjust the average temperature error of the coolant of the reactor core, and the third rod group is configured to adjust the axial power deviation error.

In an embodiment, the computer program, when being executed by the processor, forces the processor to further implement the following steps: obtaining a first action state of the first rod group based on the rod position error; obtaining a second action state of the second rod group based on the average temperature error; obtaining a third action state of the third rod group based on the axial power deviation error; and controlling the actions of the first rod group, the second rod group, and the third rod group according to the first action state, the second action state, and the third action state. Where the first action state includes the first rod group remaining stationary, the first rod group being inserted downward , or the first rod group being lifted upward; the second action state includes the second rod group remaining stationary, the second rod group being inserted downward, or the second rod group being lifted upward; and the third action state includes the third rod group remaining stationary, the third action state being inserted downward, or the third action state being lifted upward.

In an embodiment, the computer program, when being executed by the processor, forces the processor to further implement the following steps: controlling the actions of the second rod group and the third rod group according to the relationship between the average temperature error and a second preset dead region, when the first action state is the first rod group remaining stationary; controlling the actions of the first rod group and the second rod group according to the relationship between the average temperature error and the second preset dead region, when the third action state is the third rod group remaining stationary; controlling the first rod group and the third rod group to act freely and controlling the second rod group to remain stationary, when the average temperature error is within the first preset dead region; and controlling the actions of the first rod group, the second rod group and the third rod group according to the first action state, the second action state, the third action state and the relationship between the average temperature error and the second preset dead region, when the average temperature error is not within the first preset dead region and the first action state is not remaining stationary.

In an embodiment, the computer program, when being executed by the processor, forces the processor to further implement the following steps: controlling the second rod group and the third rod group to act freely, when the average temperature error is within the second preset dead region; and controlling the second rod group to act and controlling the third rod group to remain stationary, when the average temperature error is not within the second preset dead region.

In an embodiment, the computer program, when being executed by the processor, forces the processor to further implement the following steps: controlling the first rod group and the second rod group to act freely, when the average temperature error is within the second preset dead region; and controlling the second rod group to act and controlling the first rod group to remain stationary, when the average temperature error is not within the second preset dead region.

In an embodiment, the computer program, when being executed by the processor, forces the processor to further implement the following steps: controlling the first rod group and the second rod group to act according to the first action state and the second action state and controlling the third rod group to remain stationary, when the average temperature error is not within the second preset dead region; and controlling the actions of the first rod group, the second rod group, and the third rod group according to the first action state, the second action state, and the third action state, when the average temperature error is within the second preset dead region.

In an embodiment, the computer program, when being executed by the processor, forces the processor to further implement the following steps: controlling the first rod group and the second rod group to act freely, when the first action state and the second action state are identical; and controlling the second rod group to act and controlling the first rod group to remain stationary, when the first action state and the second action state are different.

In an embodiment, the computer program, when being executed by the processor, forces the processor to further implement the following steps: controlling the first rod group, the second rod group and the third rod group to act freely, when the first action state, the second action state and the third action state are identical; and controlling two rod groups having identical action states to act freely and controlling another rod group having a different action state to remain stationary, when the first action state, the second action state and the third action state are not identical.

The computer program product of the embodiment has implementation principles and technical effects similar to those of the method embodiments above, which will not be described repeatedly herein.

Those ordinary skilled in the art may understand that all or part of the process in the method of the above embodiments may be implemented by instructing the relevant hardware through a computer program, and the computer program may be stored in a non-transitory computer-readable storage medium. The computer program, when executed, may include the processes of the method embodiments above. Any reference made to the memory, the database, or other medium used in the various embodiments provided in this application may include at least one of non-transitory and transitory memory. Non-transitory memory may include read-only memory (ROM), magnetic tape, floppy disk, flash memory, optical memory, high-density embedded non-transitory memory, resistance random access memory (ReRAM), magneto resistive random access memory (MRAM), ferroelectric random access memory (FRAM), phase change memory (PCM), or graphene memory, and the like. The transitory memory may include random access memory (RAM) or external cache memory. As illustration but not limitation, the RAM may be in various forms, such as static random-access memory (SRAM) or dynamic random-access memory (DRAM), etc. The databases involved in the embodiments provided in the present application may include at least one of a relational database and a non-relational database. The non-relational databases may include, but are not limited to, a blockchain-based distributed database, and the like. The processor involved in the embodiments provided in the present application may be, but are not limited to, a general-purpose processor, a central processing unit, a graphics processor, a digital signal processor, a programmable logic, a quantum-computing-based data processing logic, and the like.

The technical features of the embodiments above may be combined arbitrarily. To make the description concise, not all possible combinations of the technical features in the above embodiments are described. However, as long as there are no contradictions in the combinations of these technical features, all of the combinations should be considered to be within the scope of the specification.

The embodiments above only represent several implementation modes of the present application, and the description thereof is relatively specific and detailed, but it should not be construed as limiting the scope of the patent. It should be noted that for those ordinary skilled in the art, various modifications and improvements may be made without departing from the concept of the present application, and all these modifications and improvements are within the protection scope of the present application. Therefore, the scope of protection of the patent application should be subject to the appended claims.

**Claims**

1. A reactor core control method, **characterized by** comprising:

    obtaining an actual temperature value and a preset temperature value of a coolant of the reactor core, and subtracting the actual temperature value from the preset temperature value to obtain an average temperature error;
    obtaining a target rod position and an actual rod position of a first rod group, subtracting the actual rod position from the target rod position to obtain a rod position error, the first rod group being configured to compensate for a power of the reactor core;
obtaining an actual axial power deviation and a preset axial power deviation of the reactor core, and subtracting the actual axial power deviation from the preset axial power deviation to obtain an axial power deviation error; and
controlling an action of the first rod group, an action of a second rod group, and an action of a third rod group based on the rod position error, the average temperature error and the axial power deviation error;
wherein the second rod group is configured to adjust the average temperature error of the coolant, and the third rod group is configured to adjust the axial power deviation error.

2. The method according to claim 1, wherein controlling the action of the first rod group, the action of the second rod group, and the action of the third rod group based on the rod position error, the average temperature error and the axial power deviation error, comprises:

    obtaining a first action state of the first rod group based on the rod position error;
    obtaining a second action state of the second rod group based on the average temperature error;
    obtaining a third action state of the third rod group based on the axial power deviation error; and
    controlling the action of the first rod group, the action of the second rod group, and the action of the third rod group according to the first action state, the second action state, and the third action state, respectively;
    wherein the first action state comprises the first rod group remaining stationary, the first rod group being inserted downward, or the first rod group being lifted upward; the second action state comprises the second rod group remaining stationary, the second rod group being inserted downward, or the second rod group being lifted upward; and the third action state comprises the third rod group remaining stationary, the third action state being inserted downward, or the third action state being lifted upward.

3. The method according to claim 2, wherein controlling the action of the first rod group, the action of the second rod group, and the action of the third rod group according to the first action state, the second action state, and the third action state, comprises:

    controlling the action of the second rod group and the action of the third rod group according to a relationship between the average temperature error and a second preset dead region, when the first action state is the first rod group remaining stationary;

controlling the action of the first rod group and the action of the second rod group according to the relationship between the average temperature error and the second preset dead region, when the third action state is the third rod group remaining stationary;

controlling the first rod group and the third rod group to act freely and controlling the second rod group to remain stationary, when the average temperature error is within a first preset dead region; and

controlling the action of the first rod group, the action of the second, and the action of the third rod group according to the first action state, the second action state, the third action state, and the relationship between the average temperature error and the second preset dead region, when the average temperature error is not within the first preset dead region, and when the first action state is not remaining stationary.

4. The method according to claim 3, wherein controlling the action of the second rod group and the action of the third rod group according to the relationship between the average temperature error and the second preset dead region comprises:

controlling the second rod group and the third rod group to act freely, when the average temperature error is within the second preset dead region; and

controlling the second rod group to act and controlling the third rod group to remain stationary, when the average temperature error is not within the second preset dead region.

5. The method according to claim 3, wherein controlling the action of the first rod group and the action of the second rod group according to the relationship between the average temperature error and the second preset dead region comprises:

controlling the first rod group and the second rod group to act freely, when the average temperature error is within the second preset dead region; and

controlling the second rod group to act and controlling the first rod group to remain stationary, when the average temperature error is not within the second preset dead region.

6. The method according to claim 3, wherein controlling the action of the first rod group, the action of the second rod group, and the action of the third rod group according to the first action state, the second action state, the third action state, and the relationship between the average temperature error and the second preset dead region, comprises:

controlling the first rod group and the second rod group to act according to the first action state and the second action state and controlling the third rod group to remain stationary, when the average temperature error is not within the second preset dead region; and

controlling the action of the first rod group, the action of the second rod group, and the action of the third rod group according to the first action state, the second action state, and the third action state, when the average temperature error is within the second preset dead region.

7. The method according to claim 6, wherein controlling the first rod group and the second rod group to act according to the first action state and the second action state comprises:

controlling the first rod group and the second rod group to act freely, when the first action state and the second action state are identical; and

controlling the second rod group to act and controlling the first rod group to remain stationary, when the first action state and the second action state are different.

8. The method according to claim 6, wherein controlling the action of the first rod group, the action of the second rod group, and the action of the third rod group according to the first action state, the second action state, and the third action state, comprises:

controlling the first rod group, the second rod group, and the third rod group to act freely, when the first action state, the second action state and the third action state are identical; and

controlling two rod groups having identical action states to act freely and controlling another rod group having a different action state to remain stationary, when the first action state, the second action state and the third action state are not identical.

9. A reactor core control apparatus, **characterized by** comprising:

a first acquisition module configured to obtain an actual temperature value and a preset temperature value of a coolant of the reactor core, and subtract the actual temperature value from the preset temperature value to obtain an average temperature error;

a second acquisition module configured to obtain a target rod position and an actual rod position of a first rod group, and subtract the actual rod position from the target rod position to obtain a rod position error, the first rod group being configured to compensate for a power of the reactor core;

a third acquisition module configured to obtain an actual axial power deviation and a preset axial power deviation of the reactor core, and subtract the actual axial power deviation from the preset axial power deviation to obtain an axial power deviation error; and

a control module configured to control an action of the first rod group, an action of a second rod group, and an action of a third rod group based on the rod position error, the average temperature error, and the axial power deviation error, wherein the second rod group is configured to adjust the average temperature error of the coolant, and the third rod group is configured to adjust the axial power deviation error.

10. A computer device, **characterized by** comprising a memory and a processor, wherein, the memory has a computer program stored thereon; and the processor, when executing the computer program, implements steps of the method according to any one of claims 1 to 8.

11. A computer-readable storage medium, having a computer program stored thereon, wherein the computer program, when executed by a processor, forces the processor to implement steps of the method according to any one of claims 1 to 8.

12. A computer program product, **characterized by** comprising a computer program, wherein the computer program, when executed by a processor, forces the processor to implement steps of the method according to any one of claims 1 to 8.

FIG. 1

| The computer device obtains an actual temperature value and a preset temperature value of a coolant of the reactor core, and subtracts the actual temperature value from the preset temperature value, to obtain an average temperature error. | 201 |
|---|---|

| The computer device obtains a target rod position and an actual rod position of a first rod group, subtracts the actual rod position from the target rod position to obtain a rod position error, and the first rod group is configured to compensate for the power of the reactor core. | 202 |

| The computer device obtains an actual axial power deviation and a preset axial power deviation of the reactor core, and subtracts the actual axial power deviation from the preset axial power deviation to obtain an axial power deviation error. | 203 |

| The computer device controls actions of the first rod group, the second rod group and the third rod group based on the rod position deviation, the average temperature deviation and the axial power deviation error. | 204 |

FIG. 2

FIG. 3

400

**Reactor Core Control Apparatus**

First Acquisition Module — 401

Second Acquisition Module — 402

Third Acquisition Module — 403

Control Module — 404

FIG. 4

Operation System

Computer Program

Database

Non-Transitory Storage

Processor

Internal Memory

System bus

I/O Interface

Communication Interface

Computer Device

FIG. 5

## INTERNATIONAL SEARCH REPORT

| International application No. |
| --- |
| **PCT/CN2022/118940** |

**A. CLASSIFICATION OF SUBJECT MATTER**

G06Q 10/06(2012.01)i; G21D 3/16(2006.01)i; G21D 3/00(2006.01)i; G21C 7/08(2006.01)i

According to International Patent Classification (IPC) or to both national classification and IPC

**B. FIELDS SEARCHED**

Minimum documentation searched (classification system followed by classification symbols)

G06Q10/-; G21D3/-; G21C7/-

Documentation searched other than minimum documentation to the extent that such documents are included in the fields searched

Electronic data base consulted during the international search (name of data base and, where practicable, search terms used)

CNABS, CNTXT, CNKI: 堆芯, 功率, 棒位, 差, 轴向功率偏差, 棒组, 温度, 阈值 VEN, USTXT, EPTXT, IEEE: core, power, rod position?, difference, axial power deviation, rod bank, temperature?, threshold value

**C. DOCUMENTS CONSIDERED TO BE RELEVANT**

| Category* | Citation of document, with indication, where appropriate, of the relevant passages | Relevant to claim No. |
| --- | --- | --- |
| PX | CN 114781891 A (CHINA NUCLEAR POWER INSTITUTE CO., LTD.; CHINA GENERAL NUCLEAR POWER CORP.; CGN POWER CO., LTD.) 22 July 2022 (2022-07-22) claims 1-12 | 1-12 |
| Y | CN 112750544 A (CHINA NUCLEAR POWER INSTITUTE CO., LTD.; CHINA NUCLEAR POWER ENGINEERING CO., LTD.; CHINA GENERAL NUCLEAR POWER CORP.; CGN POWER CO., LTD.) 04 May 2021 (2021-05-04) description, paragraphs [0051]-[0098] | 1-2, 9-12 |
| Y | CN 109190145 A (ELECTRIC POWER RESEARCH INSTITUTE OF GUANGXI POWER GRID CO., LTD.) 11 January 2019 (2019-01-11) description, paragraph [0069] | 1-2, 9-12 |
| A | CN 104617588 A (ELECTRIC POWER RESEARCH INSTITUTE, GUANGDONG POWER GRID CORP.) 13 May 2015 (2015-05-13) entire document | 1-12 |
| A | CN 107065556 A (DAYA BAY NUCLEAR POWER OPERATIONS AND MANAGEMENT CO., LTD.; CGN POWER CO., LTD.; CHINA NUCLEAR POWER TECHNOLOGY RESEARCH INSTITUTE; CHINA GENERAL NUCLEAR POWER CORP.) 18 August 2017 (2017-08-18) entire document | 1-12 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **23 December 2022** | **19 January 2023** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2022/118940** |

**C.     DOCUMENTS CONSIDERED TO BE RELEVANT**

| Category* | Citation of document, with indication, where appropriate, of the relevant passages | Relevant to claim No. |
| --- | --- | --- |
| A | CN 106531236 A (CHINA NUCLEAR POWER ENGINEERING CO., LTD.; CHINA GENERAL NUCLEAR POWER CORP.) 22 March 2017 (2017-03-22)<br>      entire document | 1-12 |
| A | JP 2020190423 A (MITSUBISHI HEAVY INDUSTRIES LTD.) 26 November 2020 (2020-11-26)<br>      entire document | 1-12 |

Form PCT/ISA/210 (second sheet) (January 2015)

**INTERNATIONAL SEARCH REPORT**
**Information on patent family members**

International application No.

**PCT/CN2022/118940**

| Patent document cited in search report | | | Publication date (day/month/year) | Patent family member(s) | | | Publication date (day/month/year) |
|---|---|---|---|---|---|---|---|
| CN | 114781891 | A | 22 July 2022 | None | | | |
| CN | 112750544 | A | 04 May 2021 | CN | 112750544 | B | 13 September 2022 |
| CN | 109190145 | A | 11 January 2019 | None | | | |
| CN | 104617588 | A | 13 May 2015 | CN | 104617588 | B | 24 May 2017 |
| CN | 107065556 | A | 18 August 2017 | CN | 107065556 | B | 24 April 2020 |
| CN | 106531236 | A | 22 March 2017 | CN | 106531236 | B | 13 November 2018 |
| JP | 2020190423 | A | 26 November 2020 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2022104614384